# EUROPÄISCHE PATENTSCHRIFT

(11) **EP 1 429 856 B1**
(45) Veröffentlichungstag und Bekanntmachung des Hinweises auf die Patenterteilung: **27.09.2006**
(21) Anmeldenummer: 02782790.6
(22) Anmeldetag: 09.09.2002
(51) Int. Cl.: B01D 1/06, B01D 1/22, B01D 3/12

(54) **EINRICHTUNG ZUR FALLSTROMVERDAMPFUNG EINER FLÜSSIGEN SUBSTANZ UND ANSCHLIESSENDEN KONDENSATION DES ENTSTANDENEN BRÜDENS**
DEVICE FOR DOWNWARD FLOW EVAPORATION OF A LIQUID SUBSTANCE AND SUBSEQUENT CONDENSATION OF THE VAPOUR FORMED
DISPOSITIF D'EVAPORATION A FLOT TOMBANT D'UNE SUBSTANCE LIQUIDE ET DE CONDENSATION SUBSEQUENTE DE LA BUEE FORMEE

(30) Priorität: 27.09.2001 DE 10147674
(43) Veröffentlichungstag der Anmeldung: 23.06.2004
(73) Patentinhaber: GEA Wiegand GmbH, D-76275 Ettlingen (DE)
(72) Erfinder: BETHGE, Daniel, 76275 Ettlingen (DE)
(74) Vertreter: Liska, Horst
(86) Internationale Anmeldenummer: PCT/EP2002/010086
(87) Internationale Veröffentlichungsnummer: WO 2003/028843

(56) Entgegenhaltungen:
- EP-A- 0 066 790
- EP-A- 0 186 291
- DE-A- 1 519 714
- DE-A- 3 223 314
- US-A- 3 233 656
- US-A- 4 282 058

## Beschreibung

Die Erfindung befasst sich mit der Fallstromverdampfung einer flüssigen Substanz und anschließenden Kondensation des entstandenen Brüdens.

Fallstromverdampfer (auch Fallfilmverdampfer genannt) werden beispielsweise in der chemischen Industrie zur Eindampfung wässriger Lösungen oder zur Aufkonzentrierung verschiedener organischer oder anorganischer Stoffe, etwa Caprolactam oder Glycerin, eingesetzt. Dabei lässt man üblicherweise die zu behandelnde Flüssigkeit aus einer Wanne von oben her auf den Innenmantel eines oder mehrerer beheizter Verdampferrohre laufen, wo sie als Film nach unten herabrinnt. Die herablaufende Flüssigkeit verdampft teilweise und geht in Brüden über. Die nicht verdampften Bestandteile der Flüssigkeit werden unterhalb des Verdampferrohrs aufgefangen und gesammelt. Flüssige Stoffgemische können so durch Verdampfung einzelner Bestandteile getrennt werden oder es kann durch Verdampfung leichtflüchtiger Bestandteile eine flüssige Substanz aufkonzentriert werden.

Im Unterschied zu Dünnschichtverdampfern mit rotierender Verteilerscheibe und Rollenwischkorb erlaubt es der einfache, weil ohne bewegte Teile und ohne Wischsystem auskommende Aufbau der Fallstromverdampfer, zu günstigen Kosten Verdampfer zu bauen, die große Durchsatzmengen von beispielsweise etlichen Tonnen pro Stunde verarbeiten können. Den Einsatzmöglichkeiten bisheriger Fallstromverdampfer sind allerdings Grenzen durch den minimalen Druck gesetzt, der im Verdampfungsraum erreicht werden kann. Je niedriger dieser Druck ist, umso geringer ist die Siedetemperatur der zu verdampfenden Stoffbestandteile. Je niedriger aber die Siedetemperatur ist, umso leichter und schonender lassen sich die verschiedenen Bestandteile einer Substanz trennen, umso weniger Heizarbeit muss zur Beheizung der Verdampferrohre aufgewendet werden und umso wirtschaftlicher lassen sich die Verdampferanlagen dementsprechend betreiben.

Bei bisherigen Fallstromverdampfern wird der anfallende Brüden regelmäßig aus dem Verdampfer abgesaugt und in einem externen Kondensator, üblicherweise mittels eines Wärmetauschers, wieder verflüssigt. Dabei wird der Brüden über eine Rohrleitung von dem Fallstromverdampfer zum Kondensator geleitet. Auf ihrem Weg im Verdampferrohr und durch die Rohrleitung erfährt die Brüdenströmung einen Druckverlust; dieser kann bei den üblichen Dimensionen der Rohrleitung ohne weiteres einige mbar betragen. Im Verdampfungsraum kann dann minimal nur ein Druck erreicht werden, der dem im Kondensationsraum herrschenden Druck plus dem Druckabfall in der Rohrleitung entspricht. Selbst bei einem starken Vakuum im Kondensationsraum von beispielsweise 0,1 mbar, kann im Verdampfungsraum dementsprechend kein Vakuum von weniger als einigen mbar erzeugt werden.

In der Verfahrenstechnik fallen gelegentlich Produkte an, die in großen Mengen kostengünstig unter Hochvakuum eingedampft, konzentriert oder destilliert werden sollen. Angesichts des gewünschten Hochvakuums kann hierzu bisher jedoch nicht auf Fallstromverdampfer zurückgegriffen werden, wenngleich sich diese aufgrund ihrer vergleichsweise geringen Investitionskosten besser als andere, technisch aufwendigere Lösungen eignen würden.

Aus dem schweizer Patent 510 450 oder der deutschen Offerilegungsschrift 1 519 714 sind Fallstromverdampfer bekannt, bei welchen ein aus einem Bündel von Kondensationsrohren bestehender Wärmetauscher innerhalb eines aufrecht stehenden Verdampferrohrs angeordnet ist. Zwar ist bei diesen Fallstromverdampfern der Abstand zwischen der vom Rohrinnenmantel des Verdampferrohrs gebildeten Verdampferfläche zu den Kondensationsflächen der Kondensationsrohre relativ gering, jedoch umschließt ein mit Durchbrechungen versehenes Jalousierohr das Kondensatorrohrbündel zwischen dem Bündel und dem Rohrinnenmantel des Verdampferrohrs. Das Jalousierohr erstreckt sich über die gesamte axiale Höhe des Verdampferrohrs und soll bei gasenden Substanzen verhindern, dass Konzentratspritzer die Kondensationsrohre erreichen. Es hat sich jedoch herausgestellt, dass das Jalousierohr zu einem unerwünschten Druckverlust führt, so dass auch bei den bekannten Fallstromverdampfern mit innenliegendem Kondensationsrohrbündel nicht unter den erwünschten Hochvakuumbedingungen im Verdampfungsraum gearbeitet werden kann.

Aus US 3 233 656 ist ein Fallstromverdampfer mit einem um eine aufrechte Achse rotierend angetriebenen Verdampferrohr bekannt, welches koaxial in einem Kondensationsrohr angeordnet ist. Im Arbeitsraum zwischen den sich radial gegenüber liegenden Rohrmänteln des Verdampferrohrs und des Kondensationsrohrs sind diametral sich gegenüber liegend zwei Wischer angeordnet, die bei der Rotation des Verdampferrohrs den von oben nach unten fließenden Produktfilm auf dem Verdampferrohr verteilen.

Aufgabe der Erfindung ist es daher, einen Fallstromverdampfer auf konstruktiv einfache Weise so weiterzubilden, dass auch bei höherem Vakuum als bisher flüssige Substanzen verarbeitet werden können.

Die Lösung dieser Aufgabe ist durch die Merkmale von Anspruch 1 gekennzeichnet. Eine solche Einrichtung zur Fallstromverdampfung einer flüssigen Substanz und anschließenden Kondensation des entstandenen Brüdens umfasst
- mehrere aufrecht stehend nebeneinander in einem Gehäuse untergebrachte Verdampferrohre,
- einen mittels eines Heizfluids beheizbaren Heizhohlraum für die Beheizung der Verdampferrohre,
- eine oberhalb der Verdampferrohre angeordnete Verteilerwanne, aus der die darin enthaltene Substanz den Verdampferrohren unter Erzeugung eines an deren Rohrmäntel herunterlaufenden Films der Substanz zuführbar ist,
- eine in dem Gehäuse angeordnete Wärmetauscheranordnung mit mehreren aufrecht stehenden Kondensationsrohren, an deren Rohrmäntel der Brüden kondensierbar ist,
- unterhalb der Verdampferrohre und unterhalb der Kondensationsrohre in dem Gehäuse untergebrachte Auffangmittel, die an den Rohrmänteln der Verdampferrohre herunterlaufendes, unverdampftes Konzentrat der Substanz bzw. an den Rohrmänteln der Kondensationsrohre herunterlaufendes, kondensiertes Destillat der Substanz getrennt auffangen,
wobei die Verdampferrohre und die Kondensationsrohre paarweise gleichachsig ineinander angeordnet sind und sich die durch den Rohrmantel des Verdampferrohrs gebildete Verdampferfläche und die durch den Rohrmantel des Kondensationsrohrs gebildete Kondensationsfläche des Rohrpaars koaxial gegenüberliegen und wobei Pumpmittel zur Evakuierung des zwischen dem Verdampferrohr und dem Kondensationsrohr jedes Rohrpaars liegenden Arbeitsraums vorgesehen sind.

Bei der erfindungsgemäßen Einrichtung liegen sich die Kondensationsfläche und die Verdampferfläche in vergleichsweise geringem radialen Abstand unmittelbar und ohne zu Druckverlusten führenden Einbauten, wie beispielsweise einem Jalousierohr, d.h. hindernisfrei gegenüber. Der Abstand der Rohrmäntel liegt in der Größenordnung von 0,5 bis 15 cm, und liegt damit bei dem im Betrieb zwischen dem Verdampferrohr und dem Kondensationsrohr sich einstellenden Hochvakuum in der Größenordnung der freien Weglänge für die von der Verdampferfläche zur Kondensationsfläche übertretenden Moleküle. Der erfindungsgemäße Fallstromverdampfer kann damit unter Hochvakuum von weniger als 1 mbar bei hoher Kondensationsausbeute betrieben werden. Soweit bei gasenden Substanzen vom Verdampferrohr zum Kondensationsrohr übertretende Spritzer zu befürchten sind, können diese in an sich bekannter Weise durch geeignete Verdampfertemperaturen vermieden werden.

Das am Außenmantel des Kondensationsrohrs niedergeschlagene Destillat wird von den Auffangmitteln getrennt von den unverdampften Bestandteilen der Flüssigkeit - hier Konzentrat genannt - aufgefangen. Der Begriff Konzentrat soll dabei lediglich stellvertretend für diese unverdampften Bestandteile stehen, selbst wenn bei einigen Anwendungsfällen der erfindungsgemäßen Einrichtung nicht vorrangig eine Aufkonzentrierung einer Substanz angestrebt wird, sondern beispielsweise eine Trennung eines Stoffgemisches, etwa einer Wasser-Öl-Emulsion, oder eine Destillation. Die erfindungsgemäße Einrichtung eignet sich deshalb zur Destillierung, Konzentrierung oder auch Trennung von Bestandteilen der Substanz.

Eine bevorzugte Weiterbildung der Erfindung sieht vor, dass die Auffangmittel zwei übereinander angeordnete Auffangböden umfassen, deren oberer das Konzentrat und deren unterer das Destillat auffängt. Damit dabei das Destillat durch den oberen Auffangboden hindurch zum unteren Auffangboden gelangen kann, weist der obere der beiden Auffangböden in Zuordnung zu jedem Kondensationsrohr eine Durchtrittsöffnung auf, durch die hindurch das an dem betreffenden Kondensationsrohr niedergeschlagene Destillat auf den unteren Auffangboden gelangt.

Vorzugsweise wird sogar jedes Kondensationsrohr durch die zugeordnete Durchtrittsöffnung ringsum mit Abstand zu deren Öffnungsrand hindurchgeführt sein. Auf diese Weise muss das Destillat nicht im freien Fall durch die Durchtrittsöffnung(en) des oberen Auffangbodens hindurch auf den unteren Auffangboden tropfen, sondern es rinnt an dem Köndensationsrohr durch die Durchtrittsöffnung hindurch. Unerwünschte Destillatspritzer auf den oberen Auffangboden können so wirksam vermieden werden.

Zweckmäßigerweise wird jede Durchtrittsöffnung von einem nach oben aufragenden Ringbund umrandet sein. Dieser leitet das vom oberen Auffangboden aufgefangene Konzentrat um die Durchtrittsöffnung(en) herum.

Bei der vorstehend erläuterten bevorzugten Ausgestaltung bildet der Rohrinnenmantel des äußeren Rohrs jedes Rohrpaars die Verdampferfläche, während der Rohraußenmantel des inneren Rohrs die Kondensationsfläche bildet. Es versteht sich, dass in einer alternativen Ausführungsform die Verdampferfläche auch durch das innere Rohr gebildet sein kann, während das äußere Rohr die Kondensationsfläche bildet. Auf diese Weise kann die verglichen mit dem Rohraußenmantel des inneren Rohrs größere Fläche des Rohrinnenmantels des äußeren Rohrs zur Erhöhung der Kondensationsleistung ausgenutzt werden, was für manche Anwendungsfälle wünschenswert ist.

Bei beiden Varianten sind die Auffangböden bevorzugt von schräg, insbesondere gegensinnig schräg, zur Horizontalen in das Gehäuse eingebauten, im Wesentlichen ebenen Auffangplatten gebildet. Es sind freilich auch gewölbte Ausgestaltungen der Auffangböden denkbar.

Es kann günstig sein, wenn wenigstens einer der Auffangböden, insbesondere zumindest der Konzentrat-Auffangboden, beheizbar ist. Bei einigen zu behandelnden Produkten kann nämlich das unverdampfte Konzentrat derart hochviskos sein, dass es nur schwer abfließt. Durch Beheizung des betreffenden Auffangbodens kann das Konzentrat dann ausreichend dünnflüssig gehalten werden, um es problemlos aus dem Gehäuse abzuführen.

Eine einfache, dennoch effektive Art der Beheizung kann darin bestehen, dass der beheizbare Auffangboden doppelwandig mit einem Hohlraum zwischen seinen beiden Wänden ausgeführt ist und dass der Hohlraum an einen Kreislauf für ein Heizmedium angeschlossen ist.

Ein Anschluss für eine mit den Pumpmitteln verbundene Evakuierungsleitung, über die der Arbeitsraum zwischen Verdampferrohr und Kondensationsrohr evakuierbar ist, kann an dem Gehäuse zwischen den beiden Auffangböden angebracht sein. Die Evakuierungsleitung mündet bevorzugt oberhalb des Destillatsammelbodens, damit lediglich die nicht kondensierbaren Komponenten abgesaugt werden. Die Pumpmittel sind dabei dazu ausgelegt, in dem Arbeitsraum einen Unterdruck von weniger als 1 mbar zu erzeugen.

Zu seiner Halterung kann das innere Rohr jedes Rohrpaars an der Verteilerwanne abgestützt sein.

Um die Substanz dem mindestens einen das Kondensationsrohr umschließenden Verdampferrohr zuzuführen, kann die Verteilerwanne bei einer ersten Variante als Lochwanne ausgeführt sein, deren Wannenboden in Zuordnung zu jedem Verdampferrohr eine Anordnung kreisförmig verteilter Durchflusslöcher für die in der Verteilerwanne enthaltene Substanz aufweist. Bei dieser Variante fließt die Flüssigkeit am Boden der Verteilerwanne durch die Durchflusslöcher ab und fällt zum jeweiligen Verdampferrohr herunter.

Nachfolgend werden Ausführungsbeispiele der Erfindung anhand der beigefügten Zeichnung näher erläutert. Es stellen dar:
- Figur 1: im Hochschnitt ein erstes Ausführungsbeispiel eines erfindungsgemäßen Fallstromverdampfers mit Innenkondensation;
- Figur 2: in Draufsicht von oben ein Anordnungsbild von Verdampferrohren und Kondensationsrohren des Fallstromverdampfers der Figur 1 und
- Figur 3: im Hochschnitt ein zweites Ausführungsbeispiel eines erfindungsgemäßen Fallstromverdampfers.

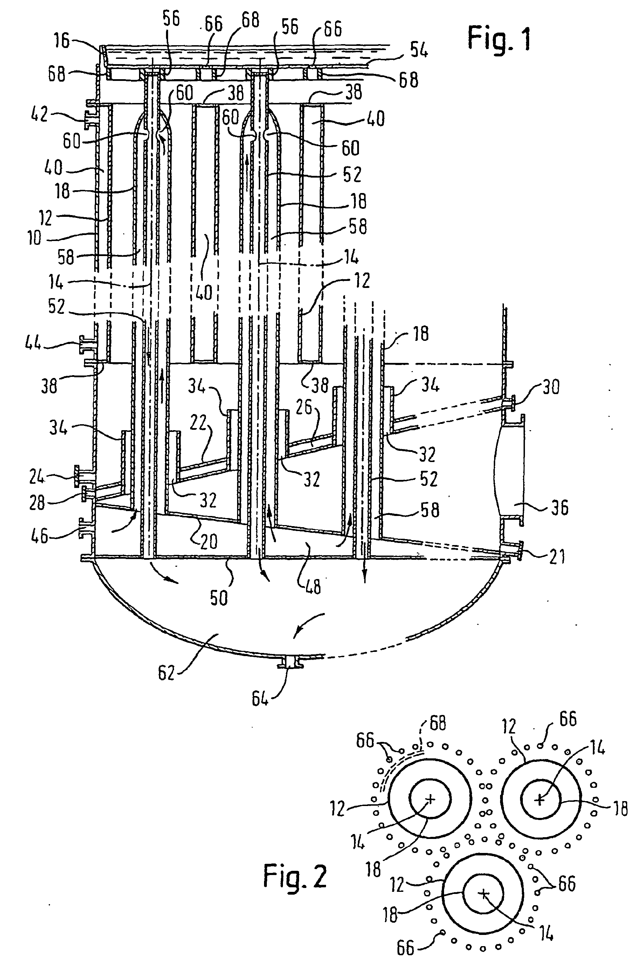

Das in den Figuren 1 und 2 gezeigte, der Verdampfung und anschließenden Kondensation von Produkten beispielsweise der chemischen oder pharmazeutischen Industrie dienende Aggregat weist ein auf dem wesentlichen Teil seiner Höhe zylindrisches Gehäuse 10 auf, in dem eine Mehrzahl von Fallstromverdampferrohren 12 mit jeweils vertikaler Rohrachse 14 nebeneinanderstehend untergebracht ist. Oberhalb der Verdampferrohre 12 ist an dem Gehäuse 10 eine Verteilerwanne 16 angebracht, aus der die Verdampferrohre 12 mit zu verdampfender Flüssigkeit beschickt werden. Die Flüssigkeit läuft als Film am Innenumfangsmantel jedes Verdampferrohrs 12 herab; während sie herunterläuft, verdampft sie teilweise. Um den so entstehenden Brüden wenigstens teilweise zu kondensieren, ist in jedes Verdampferrohr 12 zentrisch zu dessen Rohrachse 14 ein Kondensationsrohr 18 eingesetzt, an dessen Außenumfangsmantel sich die kondensierbaren Bestandteile des Brüdens niederschlagen. Im Wesentlichen im gesamten axialen Bereich, in welchem das Kondensationsrohr 18 das Verdampferrohr 12 überlappt, befinden sich keine dem Übertritt des Dampfs vom Verdampferrohr 12 auf das Kondensationsrohr 18 behindernden Einbauten. Der radiale Abstand der sich gegenüberliegenden Rohrmäntel liegt im Zentimeterbereich und beträgt 0,5 bis 15 cm. Der Abstand liegt damit in der Größenordnung der freien Molekülweglänge. Der Niederschlag am Kondensationsrohr 18 - hier Destillat genannt - läuft an den Kondensationsrohren 18 herab. An ihrem Fuß sind die Kondensationsrohre 18 mit einer schräg geneigt in das Gehäuse 10 eingebauten Auffangplatte 20 verbunden, die das Destillat auffängt. Das Destillat läuft in Gefällerichtung der Auffangplatte 20 zu deren tiefster Stelle und sammelt sich dort. Über einen Gehäuseanschluss 21 kann das gesammelte Destillat anschließend aus dem Gehäuse 10 abgezogen werden.

Unterhalb der Verdampferrohre 12, jedoch oberhalb der Auffangplatte 20, ist eine weitere Auffangplatte 22 ebenfalls schräg geneigt in das Gehäuse 10 eingebaut. Diese Auffangplatte 22 dient zum Auffangen der hier kurz als Konzentrat bezeichneten, nicht verdampften Bestandteile der an den Verdampferrohren 12 herablaufenden Flüssigkeit. Die Verdampferrohre 12 enden im Abstand oberhalb der Auffangplatte 22, weswegen das Konzentrat vom Fuß der Verdampferrohre 12 im freien Fall auf die Auffangplatte 22 herabfällt. Die schräge Einbaulage der Auffangplatte 22 führt wiederum dazu, dass das Konzentrat in Gefällerichtung der Auffangplatte 22 zu deren tiefster Stelle fließt und sich dort sammelt. Über einen Gehäuseanschluss 24 kann das gesammelte Konzentrat dann aus dem Gehäuse 10 abgezogen werden.

Bei einigen zu verdampfenden Produkten kann das Konzentrat vergleichsweise zähflüssig sein und nur schwer auf der Auffangplatte 22 abfließen. Das Abfließen wird erleichtert, wenn die Viskosität des Konzentrats herabgesetzt wird. Hierzu ist die Auffangplatte 22 als doppelwandige Hohlplatte ausgeführt, deren mit 26 bezeichneter Plattenhohlraum über Anschlussstutzen 28, 30 am Gehäuse 10 an einen nicht näher dargestellten Heizkreislauf anschließbar ist. In diesem Heizkreislauf zirkuliert ein Heizfluid (etwa Dampf oder erwärmtes Öl), das an einem der Anschlussstutzen 28, 30 eingeleitet und am anderen Anschlussstutzen abgeführt wird. Z.B. wird Dampf durch den höhergelegenen Anschlussstutzen 30 in den Plattenhohlraum 26 eingeleitet und das Dampfkondensat aus dem tiefergelegenen Anschlussstutzen abgeführt. Bei Öl als Heizfluid ist die Anschlussweise umgekehrt.

Für jedes Kondensationsrohr 18 ist in der oberen Auffangplatte 22 eine Durchtrittsöffnung 32 ausgebildet, deren Öffnungsquerschnitt größer als der Rohrquerschnitt der Kondensationsrohre 18 ist, so dass letztere ringsum mit radialem Freiraum durch die Durchtrittsöffnungen 32 hindurch bis zur unteren Auffangplatte 20 herabgeführt werden können. In jede der Durchtrittsöffnungen 32 ist ein Trennrohr 34 eingesetzt, welches die Auffangplatte 22 nach oben überragt und so einen Ringbund bildet, der verhindert, dass das von den Verdampferrohren 12 auf die Auffangplatte 22 fallende Konzentrat in die betreffende Durchtrittsöffnung 32 hineinläuft. Die Trennrohre 34 gewährleisten so eine saubere Trennung des Destillats und des Konzentrats. Es empfiehlt sich, die Trennrohre 34 hinreichend lang auszuführen, damit sie nicht nur das auf der Auffangplatte 22 abfließende Konzentrat um die Durchtrittsöffnungen 32 herumleiten können, sondern auch etwaige Spritzer des Konzentrats auf die Kondensationsrohre 18 abfangen können.

In Figur 1 ist gut zu erkennen, dass die beiden Auffangplatten 20, 22 gegensinnig schräg in das Gehäuse 10 eingebaut sind. Hierdurch kann in einem Gehäusebereich ein großer Abstand zwischen den Auffangplatten 20, 22 geschaffen werden, ohne insgesamt die Bauhöhe des Aggregats vergrößern zu müssen. In dem angesprochenen Bereich großen Abstands zwischen den Auffangplatten 20, 22 besteht dann genügend Platz, um am Gehäuse 10 einen Evakuierungsanschluss 36 anzubringen, an den in nicht näher dargestellter Weise eine mit einer Vakuumpumpe verbundene Saugleitung anschließbar ist. Über den Evakuierungsanschluss 36 werden Gase sowie die nicht kondensierbaren Bestandteile des Brüdens aus dem Arbeitsraum zwischen den Verdampferrohren 12 und den Kondensationsrohren 18 durch die Freiräume zwischen den Trennrohren 34 und den Kondensationsrohren 18 hindurch abgesaugt. Die große Ausdehnung der Verdampfungsflächen und der Kondensationsflächen und deren geringer Abstand rufen dabei nur einen Druckverlust der Brüdenströmung in vernachlässigbarem Umfang vor. Dies ermöglicht es, in dem Arbeitsraum Drücke unterhalb 1 mbar, beispielsweise in der Größenordnung von 0,1 mbar, zu erzeugen. Eine Verdampfung bei derart niedrigen Drücken wurde bei bisherigen Fallstromverdampfern nicht erzielt.

An ihrem Fuß und ihrem Kopf sind die Verdampferrohre 12 durch Plattenstege 38 aneinander und an dem Gehäuse 10 gehalten. Zwischen dem Gehäuse 10, den Verdampferrohren 12 und den Plattenstegen 38 ist ein jedes Verdampferrohr 12 ringsum umschließender Hohlraum 40 gebildet, der Teil eines nicht näher dargestellten, weiteren Heizkreislaufs ist. In diesem Heizkreislauf zirkuliert ein der Beheizung der Verdampferrohre 12 dienendes Heizfluid, beispielsweise heißer Dampf oder ein Wärmeträgeröl. Über einen oberen Anschlussstutzen 42 und einen unteren Anschlussstutzen 44 am Gehäuse 10 wird das Heizfluid in den Heizhohlraum 40 eingeleitet und aus diesem abgeführt. Bei Verwendung von Dampf als Heizfluid wird der obere Anschlussstutzen 42 als Einlass genutzt werden, damit das sich unvermeidlich bildende Kondensat am unteren Anschlussstutzen 44 ausgelassen werden kann. Bei Verwendung eines Wärmeträgeröls können der untere Anschlussstutzen 44 als Einlass und der obere Anschlussstutzen 42 als Auslass genutzt werden.

Der Heizhohlraum 40 ist in axialer Richtung unterteilt und jeder dieser Teilräume ist getrennt mit einem Heizfluid zu beschicken (dies ist in den Figuren nicht gezeigt). Auf diese Weise ist es möglich, entlang der Verdampferrohre 12 eine unterschiedliche Heiztemperatur einzustellen.

Zur effizienten Kondensation des Brüdens sind die Kondensationsrohre 18 innenseitig gekühlt. Hierzu sind die Kondensationsrohre 18 in einen nicht näher dargestellten Kühlkreislauf eingebunden, in dem ein Kühlmittel zirkuliert. Das Kühlmittel gelangt über einen Einlassstutzen 46 am Gehäuse 10 in einen Kühlmittelverteilerraum 48, welcher nach oben hin durch die Auffangplatte 20 und nach unten hin durch eine in das Gehäuse 10 eingezogene Zwischenwand 50 begrenzt ist. Jedes der Kondensationsrohre 18 ist doppelwandig ausgeführt und weist hierzu ein Innenrohr 52 auf, das fußseitig bis zur Zwischenwand 50 herabreicht und dort abgestützt ist. Kopfseitig reichen die Innenrohre 52 bis nahe an den mit 54 bezeichneten Boden der Verteilerwanne 16 heran. Dort sind sie an Halteringen 56 abgestützt, die an der Unterseite des Wannenbodens 54 angebracht sind.

In jedem Kondensationsrohr 18 ist um dessen Innenrohr 52 herum ein Ringraum 58 gebildet, in den von unten her das Kühlmittel aus dem Kühlmittelverteilerraum 48 einströmt. Das Kühlmittel strömt in den Ringräumen 58 der Kondensationsrohre 18 nach oben, bis es zu Öffnungen 60 gelangt, die in die Innenrohre 52 eingearbeitet sind. Dort strömt es in den Innenraum der Innenrohre 52 hinein und fließt wieder nach unten. Am Fuß der Innenrohre 52 tritt es in ein unter der Zwischenwand 50 gelegenes Sammelbecken 62 ein und verlässt das Verdampferaggregat über einen Auslassstutzen 64. Der Weg, den das Kühlmittel innerhalb des Verdampferaggregats nimmt, ist in Figur 1 durch Pfeile verdeutlicht.

Um die in der Verteilerwanne 16 enthaltene, zu verdampfende Flüssigkeit den Verdampferrohren 12 zuzuführen, ist die Verteilerwanne 16 als Lochwanne ausgeführt, d.h. ihr Wannenboden 54 ist von einer Vielzahl Durchflusslöcher 66 durchbohrt. Wie insbesondere in Figur 2 zu erkennen ist, sind die Durchflusslöcher 66 kreisförmig verteilt um jedes Verdampferrohr 12 angeordnet. Dies ermöglicht es, die Flüssigkeit den Verdampferrohren 12 gleichmäßig um deren Rohrumfang verteilt zuzuführen. Die Durchflusslöcher 66 sind über den Plattenstegen 38 angeordnet, also gegenüber dem Innenumfangsmantel der Verdampferrohre 12 etwas nach radial außen versetzt. Die durch die Durchflusslöcher 66 durchlaufende Flüssigkeit tropft so auf die Plattenstege 38 herab, von wo sie sich auf den Innenumfangsmantel der Verdampferrohre 12 ergießt. Um zu vermeiden, dass die vom Wannenboden 54 heruntertropfende Flüssigkeit auf die Kondensationsrohre 18 spritzt, sind an der Unterseite des Wannenbodens 54 nach unten ragende Spritzschutzringe 68 angebracht, die - wie bruchstückhaft in Figur 2 angedeutet - innerhalb der Lochkreise der Durchflusslöcher 66 liegen: Auch bei einem Überlaufen der Verteilerwanne 16 sind die Spritzschutzringe 68 als Abwehr gegenüber ungewollten Spritzern auf die Kondensationsrohre 18 wirksam.

Im Folgenden wird eine Variante des vorangegangen erläuterten Fallstromverdampfers beschrieben. Gleichwirkende Komponenten sind mit den Bezugszahlen aus den Fig. 1 und 2 bezeichnet und zur Unterscheidung mit dem Buchstaben a versehen. Zur Erläuterung des Aufbaus und der Wirkungsweise wird auf die vorangegangene Beschreibung Bezug genommen.

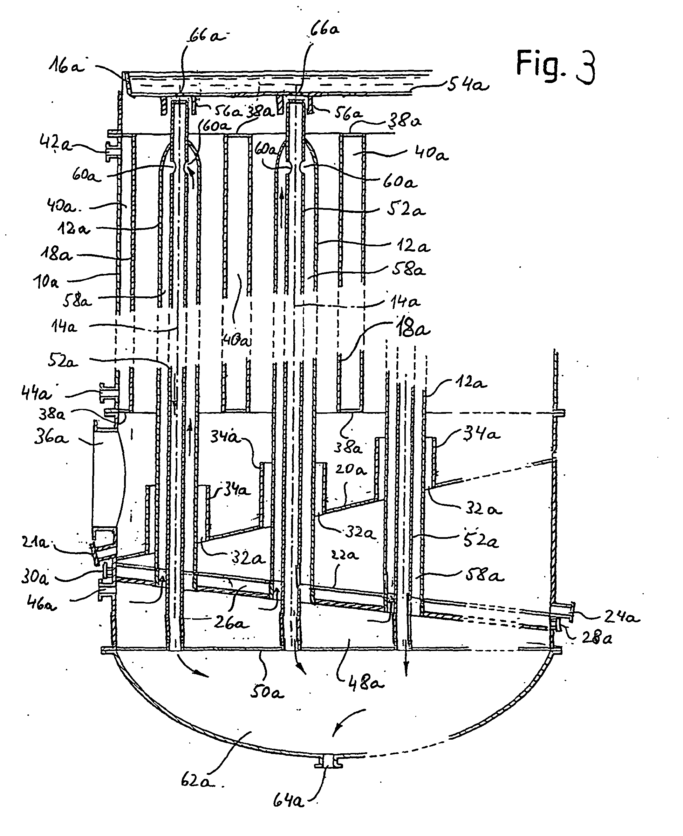

Der in Fig. 3 dargestellte Fallstromverdampfer unterscheidet sich vom Fallstromverdampfer der Fig. 1 und 2 in erster Linie dadurch, dass die Verdampferrohre 12a nunmehr gleichachsig in den zugeordneten Kondensationsrohren 18a angeordnet sind. Dementsprechend sind auch die das kondensierte Destillat auffangende Auffangplatte 20a und die das Konzentrat auffangende Auffangplatte 22a in ihrer Anordnung übereinander vertauscht. Die Auffangplatte 20a ist oben angeordnet, die Auffangplatte 22a darunter.

Wie Fig. 3 im Einzelnen zeigt, wird jedes der Verdampferrohre 12a innenseitig erwärmt und ist an einen Heizmittelkreis angeschlossen, in dem ein Heizmedium, beispielsweise Heißdampf, zirkuliert. Das Heizmedium strömt über einen Einlassstutzen 46a des Gehäuses 10a in einen Heizmittelverteilerraum 48a, der nach oben durch die Zwischenplatte 22a und nach unten durch eine Zwischenwand 50a begrenzt ist. Jedes Verdampferrohr 12a ist doppelwandig ausgeführt und enthält ein in der Zwischenwand 50a mündendes Innenrohr 52a. Das Heizmedium durchströmt den Zwischenraum. 58a zwischen den Rohren 12a, 52a und tritt im Bereich des oberen Endes des Verdampferrohrs 12a in Öffnungen 60a in das Innenrohr 52a ein, wo es nach unten in einen Sammelraum 62a austritt und über einen Auslassstutzen 64a abgeführt wird.

Das Kondensationsrohr 18a ist gleichfalls doppelwandig ausgebildet und enthält einen das Kondensationsrohr 18a umschließenden Hohlraum 40a, der über Anschlussstutzen 42a, 44a an den Kühlmittelkreislauf anzuschließen ist.

Die Auffangplatten 20a, 22a sind wiederum gegensinnig geneigt in das Gehäuse 10a eingebaut, wobei die von der unteren Auffangplatte 22a ausgehenden Verdampferrohre die obere Auffangplatte 20a mit Abstand in Öffnungen 32a durchsetzen, während die Kondensationsrohre 18a oberhalb der Auffangplatte 20a enden. Es versteht sich, dass die Auffangplatten 20a, 22a auch gleichsinnig geneigt eingebaut sein können.

An ihren oberen Enden sind die Verdampferrohre 12a an der oberhalb der Verdampferrohre 12a angeordneten Verteilerwanne 16a geführt. Die Verteilerwanne 16a hat, wie bei 66a dargestellt, Löcher, über die die zu verdampfende Substanz auf die Oberseite der Verdampferrohre 12a austreten kann. Die Verdampferrohre 12a sind an Halteringen 56a an der Unterseite des Wannenbodens 54a geführt, wobei der Haltering 56a das Innenrohr 52a mit radialem Abstand umschließt und zugleich einen Spritzschutzring bildet.

Die zu verdampfende Substanz tritt über die Löcher 66a aus und rinnt am Rohraußenmantel des Verdampferrohrs 12a durch die Öffnungen 32a bis zum Auffangboden 22a nach unten, entlang dem das nicht verdampfte Konzentrat über den Stutzen 24a abgeführt wird. Die im Überlappungsbereich zum Kondensationsrohr 18a verdampfte Substanz kondensiert am Rohrinnenmantel des Kondensationsrohrs 18a und rinnt als kondensiertes Destillat zur Auffangplatte 20a, an der es über den Anschlussstutzen 21a abgezogen wird. Um zu verhindern, dass das Destillat durch die Öffnungen 32a dringt, sind diese unterhalb der Kondensationsrohre 21a mit Trennrohren 34a erhöht.

Ähnlich dem Ausführungsbeispiel der Fig. 1 und 2 ist die das Konzentrat abführende Auffangplatte 22a doppelwandig ausgeführt und begrenzt einen Hohlraum 26a, der über Anschlussstutzen 28a, 30a mit einem Heizmedium beschickt werden kann.

Der Evakuierungsanschluss 36a, über welchen Gase sowie die nicht kondensierbaren Bestandteile des Brüden aus dem Arbeitsraum zwischen den Verdampferrohren 12a und den Kondensationsrohren 18a abgeführt werden, ist im Ausführungsbeispiel der Fig. 3 zur Minderung von Druckverlusten oberhalb der oberen Auffangplatte, jedoch unterhalb des Überlappungsbereichs der Rohrpaare 12a, 18a vorgesehen. Es versteht sich, dass auch im Ausführungsbeispiel der Fig. 1 und 2 der Evakuierungsanschluss an dieser Stelle vorgesehen sein kann.

Auch in der Variante der Fig. 3 enthält der Arbeitsraum zwischen dem Verdampferrohr 12a und dem das Verdampferrohr 12a konzentrisch umschließenden Kondensationsrohr 18a jedes Rohrpaars keine druckmindernden Einbauten und hat eine radiale Breite von einigen Zentimetern.

## Patentansprüche

1. Einrichtung zur Fallstromverdampfung einer flüssigen Substanz und anschließenden Kondensation des entstandenen Brüdens, umfassend
- mehrere aufrecht stehend nebeneinander in einem Gehäuse untergebrachte Verdampferrohre (12; 12a),
- einen mittels eines Heizfluids beheizbaren Heizhohlraum (40; 12a) für die Beheizung der Verdampferrohre (12; 12a),
- eine oberhalb der Verdampferrohre (12; 12a) angeordnete Verteilerwanne (16; 16a), aus der die darin enthaltene Substanz den Verdampferrohren (12; 12a) unter Erzeugung eines an deren Rohrmäntel herunterlaufenden Films der Substanz zuführbar ist,
- eine in dem Gehäuse (10; 10a) angeordnete Wärmetauscheranordnung mit mehreren aufrecht stehenden Kondensationsrohren (18; 18a), an deren Rohrmäntel der Brüden kondensierbar ist,
- unterhalb der Verdampferrohre (12; 12a) und unterhalb der Kondensationsrohre (18; 18a) in dem Gehäuse (10; 10a) untergebrachte Auffangmittel (20, 22; 20a, 22a), die an den Rohrmänteln der Verdampferrohre (12; 12a) herunterlaufendes, unverdampftes Konzentrat der Substanz bzw. an den Rohrmänteln der Kondensationsrohre (18; 18a) herunterlaufendes, kondensiertes Destillat der Substanz getrennt auffangen,
wobei die Verdampferrohre (12; 12a) und die Kondensationsrohre (18; 18a) paarweise gleichachsig ineinander angeordnet sind und sich die durch den Rohrmantel des Verdampferrohrs (12; 12a) gebildete Verdampferfläche und die durch den Rohrmantel des Kondensationsrohr (18; 18a) gebildete Kondensationsfläche jedes Rohrpaars koaxial gegenüberliegen und wobei Pumpmittel zur Evakuierung des zwischen dem Verdampferrohr (12; 12a) und dem Kondensationsrohr (18; 18a) jedes Rohrpaars liegenden Arbeitsraums vorgesehen sind,
**dadurch gekennzeichnet, dass** sich die Verdampferfläche und die Kondensationsfläche jedes Rohrpaars in einem Abstand zwischen 0,5 und 15 cm hindernisfrei gegenüberliegen und die Pumpmittel in dem Arbeitsraum einen Unterdruck von weniger als 1 mbar erzeugen,
und dass der Heizhohlraum (40; 12a) in axialer Richtung der Verdampferrohre (12; 12a) unterteilt und diese Teilräume getrennt mit Heizfluid beschickbar sind, derart, dass entlang der Verdampferrohre (12; 12a) eine unterschiedliche Heiztemperatur eingestellt ist.

2. Einrichtung nach Anspruch 1,
**dadurch gekennzeichnet, dass** die Kondensationsrohre (18) in den Verdämpferrohren (12) angeordnet sind, wobei der Rohrinnenmantel des Verdampferrohrs (12) die Verdampferfläche und der Rohraußenmantel des Kondensationsrohrs (18) eine dazu koaxiale Kondensationsfläche bilden.

3. Einrichtung nach Anspruch 2,
**dadurch gekennzeichnet, dass** die Auffangmittel (20, 22) zwei übereinander angeordnete Auffangböden (20, 22) umfassen, deren oberer (22) das Konzentrat und deren unterer (20) das Destillat auffängt, und dass der obere (22) der beiden Auffangböden (20, 22) in Zuordnung zu jedem Kondensationsrohr (18) eine Durchtrittsöffnung (32) aufweist, durch die hindurch das an dem betreffenden Kondensationsrohr (18) niedergeschlagene Destillat auf den unteren Auffangboden (20) gelangt.

4. Einrichtung nach Anspruch 3,
**dadurch gekennzeichnet, dass** jedes Kondensationsrohr (18) durch die zugeordnete Durchtrittsöffnung (32) ringsum mit Abstand zu deren Öffnungsrand hindurchgeführt ist.

5. Einrichtung nach Anspruch 1,
**dadurch gekennzeichnet, dass** die Verdampferrohre (12a) in den Kondensationsrohren (18a) angeordnet sind, wobei der Rohrinnenmantel des Kondensationsrohrs (18a) die Kondensationsfläche (12a) und der Rohraußenmantel des Verdampferrohrs (12a) eine dazu koaxiale Verdampferfläche bilden.

6. Einrichtung nach Anspruch 5,
**dadurch gekennzeichnet, dass** die Auffangmittel zwei übereinander angeordnete Auffangböden (20a, 22a) umfassen, deren oberer (20a) das Destillat und deren unterer (22a) das Kondensat auffängt und dass der obere (20a) der beiden Auffangböden (20a, 22a) in Zuordnung zu jedem Verdampferrohr (12a) eine Durchtrittsöffnung (34a) aufweist, durch die hierdurch das an dem betreffenden Verdampferrohr (12a) herunterrinnende Konzentrat auf den unteren Auffangboden (22a) gelangt.

7. Einrichtung nach Anspruch 6,
**dadurch gekennzeichnet, dass** jedes Verdampferrohr (12a) durch die zugeordnete Durchtrittsöffnung (32a) ringsum mit Abstand zu deren Öffnungsrand hindurchgeführt ist.

8. Einrichtung nach einem der Ansprüche 3, 4, 6 oder 7,
**dadurch gekennzeichnet, dass** jede Durchtrittsöffnung (32; 32a) von einem nach oben aufragenden Ringbund (34; 34a) umrandet ist.

9. Einrichtung nach einem der Ansprüche 3, 4 oder 6 bis 8,
**dadurch gekennzeichnet, dass** die Auffangböden (20, 22; 20a, 22a) von schräg, insbesondere gegensinnig schräg, zur Horizontalen in das Gehäuse (10; 10a) eingebauten, im Wesentlichen ebenen Auffangplatten gebildet sind.

10. Einrichtung nach einem der Ansprüche 3, 4 oder 6 bis 9,
**dadurch gekennzeichnet, dass** wenigstens einer (22) der Auffangböden (20, 22; 20a, 22a), insbesondere zumindest der Konzentrat-Auffangboden (22, 22a), beheizbar ist.

11. Einrichtung nach Anspruch 10.
**dadurch gekennzeichnet, dass** der beheizbare Auffangboden (22; 22a) doppelwandig mit einem Hohlraum (26; 26a) zwischen seinen beiden Wänden ausgeführt ist und dass der Hohlraum (26; 26a) an einen Kreislauf für ein Heizmedium angeschlossen ist.

12. Einrichtung nach einem der Ansprüche 3, 4 oder 6 bis 11,
**dadurch gekennzeichnet, dass** das Gehäuse (10; 10a) zwischen den beiden Auffangböden (20, 22) oder oberhalb des oberen der beiden Auffangböden (20a, 22a) einen Anschluss (36; 36a) für eine mit Pumpmitteln verbundene Evakuierungsleitung aufweist.

13. Einrichtung nach einem der Ansprüche 1 bis 12,
**dadurch gekennzeichnet, dass** jedes innenliegende Rohr jedes Verdampferrohr-Kondensationsrohr-Paars an der Verteilerwanne (16) abgestützt ist.

14. Einrichtung nach Anspruch 2 oder einem der Ansprüche 3, 4 oder 8 bis 13 in Rückbezug auf Anspruch 2,
**dadurch gekennzeichnet, dass** zur Zuführung der Substanz zu dem mindestens einen Verdampferrohr (12) die Verteilerwanne (16) als Lochwanne ausgeführt ist, deren Wannenboden (54) in Zuordnung zu jedem Verdampferrohr (12) ein dazu zentrisches Durchflussloch oder eine Anordnung kreisförmig verteilter Durchflusslöcher (66) für die in der Verteilerwanne (16) enthaltene Substanz aufweist.

15. Einrichtung nach Anspruch 2 oder einem der Ansprüche 3, 4 oder 8 bis 14 in Rückbezug auf Anspruch 2,
**dadurch gekennzeichnet, dass** an der Verteilerwanne (16; 16a) deren Wannenboden (54; 54a) nach unten überragende jedoch oberhalb des Kondensationsrohrs (18; 18a) endende Spritzschutzflächen (68) angeordnet sind, welche der Abwehr von Spritzern der zu verdampfenden Substanz auf das mindestens eine Kondensationsrohr (18) dienen.

## Claims

1. Device for downward flow evaporation of a liquid substance and subsequent condensation of the vapour formed, comprising
- a plurality of vertical evaporator tubes (12; 12a) housed side by side in a casing,
- a heating cavity (40; 12a), heatable by means of a heating fluid, for heating the evaporator tubes (12; 12a),
- a distributor tank (16; 16a) which is arranged above the evaporator tubes (12; 12a) and from which the substance contained therein can be fed to the evaporator tubes (12; 12a) with production of a film of the substance which runs down the tube surfaces of said evaporator tubes,
- a heat exchanger arrangement arranged in the casing (10; 10a) and having a plurality of vertical condensation tubes (18; 18a), on the tube surfaces of which the vapour can be condensed,
- receiving means (20, 22; 20a, 22a) which are housed below the evaporator tubes (12; 12a) and below the condensation tubes (18; 18a) in the casing (10; 10a) and which separately receive unevaporated concentrate of the substance which runs down the tube surfaces of the evaporator tubes (12; 12a) or condensed distillate of the substance which runs down the tube surfaces of the condensation tubes (18; 18a),
the evaporator tubes (12; 12a) and the condensation tubes (18; 18a) being arranged coaxially one inside the other in pairs and the evaporator surface formed by the tube surface of the evaporator tube (12; 12a) and the condensation surface of each tube pair formed by the tube surface of the condensation tube (18; 18a) being coaxially opposite one another and.pumping means being provided for evacuating the working space situated between the evaporator tube (12; 12a) and the condensation tube (18; 18a) of each tube pair, **characterized in that** the evaporator surface and the condensation surface of each tube pair are opposite one another by a distance of from 0.5 to 15 cm apart, free of obstacles, and the pumping means generate a reduced pressure of less than 1 mbar in the working space,
and **in that** the heating cavity (40; 12a) is divided in the axial direction of the evaporator tubes (12; 12a) and these partial spaces can be fed separately with heating fluid in such a way that a different heating temperature is established along the evaporator tubes (12; 12a).

2. Device according to Claim 1, **characterized in that** the condensation tubes (18) are arranged in the evaporator tubes (12), the inner surface of the evaporator tube (12) forming the evaporator surface and the outer surface of the condensation tube (18) forming a condensation surface coaxial therewith.

3. Device according to Claim 2, **characterized in that** the receiving means (20, 22) comprise two receiving trays (20, 22) which are arranged one above the other and the upper one (22) of which receives the concentrate and the lower one (20) of which receives the distillate, and that the upper (22) of the two receiving trays (20, 22) has a passage (32) which is coordinated with each condensation tube (18) and through which the distillate deposited on the relevant condensation tube (18) passes onto the lower receiving tray (20).

4. Device according to Claim 3, **characterized in that** each condensation tube (18) is led through the coordinated passage (32) at a distance from its opening edge all around.

5. Device according to Claim 1, **characterized in that** the evaporator tubes (12a) are arranged in the condensation tubes (18a), the inner surface of the condensation tube (18a) forming the condensation surface (12a) and the outer surface of the evaporator tube (12a) forming an evaporator surface coaxial therewith.

6. Device according to Claim 5, **characterized in that** the receiving means comprise two receiving trays (20a, 22a) which are arranged one above the other and the upper one (20a) of which receives the distillate and the lower one (22a) of which receives the condensate, and that the upper (20a) of the two receiving trays (20a, 22a) has a passage (34a) which is coordinated with each evaporator tube (12a) and through which the concentrate running down the relevant evaporator tube (12a) passes onto the lower receiving tray (22a).

7. Device according to Claim 6, **characterized in that** each evaporator tube (12a) is led through the coordinated passage (32a) at a distance from its opening edge all around.

8. Device according to one of Claims 3, 4, 6 or 7, **characterized in that** each passage (32; 32a) is bordered by an upward-projecting annular collar (34; 34a).

9. Device according to one of Claims 3, 4 or 6 to 8, **characterized in that** the receiving trays (20, 22; 20a, 22a) are formed by substantially flat receiving plates installed obliquely, in particular obliquely in opposite directions, relative to the horizontal in the casing (10; 10a).

10. Device according to one of Claims 3, 4 or 6 to 9, **characterized in that** at least one (22) of the receiving trays (20, 22; 20a, 22), in particular at least the concentrate receiving tray (22, 22a), is heatable.

11. Device according to Claim 10, **characterized in that** the heatable receiving tray (22; 22a) is double-walled with a cavity (26; 26a) between its two walls and that the cavity (26; 26a) is connected to a circulation for a heating medium.

12. Device according to one of Claims 3, 4 or 6 to 11, **characterized in that** the casing (10; 10a) has, between the two receiving trays (20, 22) or above the upper of the two receiving trays (20a, 22a), a connection (36; 36a) for an evacuating pipe connected to pumping means.

13. Device according to one of Claims 1 to 12, **characterized in that** each inner tube of each evaporator tube/condensation tube pair is supported on the distributor tank (16).

14. Device according to Claim 2 or one of Claims 3, 4 or 8 to 13, relating back to Claim 2, **characterized in that**, for feeding the substance to the at least one evaporator tube (12), the distributor tank (16) is in the form of a perforated tank whose tank bottom (54) has, coordinated with each evaporator tube (12), a flow-through hole concentric therewith or an arrangement of flow-through holes (66) distributed in a circular manner and intended for the substance contained in the distributor tank (16).

15. Device according to Claim 2 or one of Claims 3, 4 or 8 to 14, relating back to Claim 2, **characterized in that** splash guard surfaces (68) which project downward over the tank bottom (54; 54a) of the distributor tank (16; 16a) but end above the condensation tube (18; 18a) and serve for defence against splashes of the substance to be evaporated onto the at least one condensation tube (18) are arranged on the distributor tank (16; 16a).

## Revendications

1. Dispositif d'évaporation à flot tombant d'une substance liquide et de condensation subséquente de la buée formée, comprenant :
- plusieurs tubes évaporateurs (12 ; 12a) placés droits les uns à côté des autres dans un boîtier,
- une cavité de chauffage (40 ; 12a) pouvant être chauffée au moyen d'un fluide chauffant pour le chauffage des tubes évaporateurs (12 **;** 12a),
- un bac répartiteur (16 ; 16a) placé au-dessus des tubes évaporateurs (12 ; 12a), depuis lequel la substance contenue dedans peut être envoyée dans les tubes évaporateurs (12, 12a) en produisant un film de la substance descendant sur leurs enveloppes de tubes,
- un système échangeur de chaleur placé dans le boîtier (10 ; 10a) avec plusieurs tubes de condensation (18 ; 18a) placés droits, sur les enveloppes desquels la buée peut se condenser,
- des moyens de collecte (20, 22 ; 20a, 22a) logés dans le boîtier (10 ; 10a) au-dessous des tubes évaporateurs (12 ; 12a) et au-dessous des tubes de condensation (18 ; 18a), moyens qui recueillent séparément le concentré de substance non évaporé qui descend sur les enveloppes des tubes évaporateurs (12 ; 12a) et le distillat condensé de substance qui descend sur les enveloppes des tubes de condensation (18 ; 1 8a),
dans lequel les tubes évaporateurs (12 ; 1 2a) et les tubes de condensation (18 ; 18a) sont placés par paires les uns dans les autres sur un même axe, et la surface d'évaporateur formée par l'enveloppe du tube évaporateur (12 ; 12a) et la surface de condensation de chaque paire de tubes formée par l'enveloppe du tube de condensation (18 ; 18a) se font face de manière coaxiale, et dans lequel des moyens de pompage sont prévus pour évacuer la chambre de travail située entre le tube évaporateur (12 ; 12a) et le tube de condensation (18 ; 18a) de chaque paire de tubes,
**caractérisé en ce que** la surface d'évaporateur et la surface de condensation de chaque paire de tubes se font face sans obstacle à une distance comprise entre 0,5 et 15 cm et les moyens de pompage produisent dans la chambre de travail une dépression inférieure à 1 mbar,
et **en ce que** la cavité de chauffage (40 ; 12a) est subdivisée dans la direction axiale des tubes évaporateurs (12 ; 12a) et ces différents espaces peuvent être chargés séparément en fluide de chauffage, de telle sorte qu'une température de chauffage variable peut être instaurée le long des tubes évaporateurs (12 ; 12a).

2. Dispositif selon la revendication 1, **caractérisé en ce que** les tubes de condensation (18) sont placés dans les tubes évaporateurs (12), l'enveloppe intérieure du tube évaporateur (12) formant la surface d'évaporateur et l'enveloppe extérieure du tube de condensation (18) formant une surface de condensation coaxiale à la première.

3. Dispositif selon la revendication 2, **caractérisé en ce que** les moyens de collecte (20, 22) comprennent deux fonds de collecte (20, 22) superposés, dont celui du haut (22) recueille le concentré et celui du bas (20) le distillat, et **en ce que** celui du haut (22) des deux fonds de collecte (20, 22) présente pour chaque tube de condensation (18) une ouverture de passage (32) à travers laquelle le distillat déposé sur le tube de condensation (18) concerné arrive dans le fond de collecte inférieur (20).

4. Dispositif selon la revendication 3, **caractérisé en ce que** chaque tube de condensation (18) passe à travers l'ouverture de passage (32) associée à distance, sur tout le tour, du bord de l'ouverture.

5. Dispositif selon la revendication 1, **caractérisé en ce que** les tubes évaporateurs (12a) sont placés dans les tubes de condensation (18a), l'enveloppe intérieure du tube de condensation (18a) formant la surface de condensation (12a) et l'enveloppe extérieur du tube évaporateur (12a) formant une surface d'évaporateur coaxiale à elle.

6. Dispositif selon la revendication 5, **caractérisé en ce que** les moyens de collecte comprennent deux fonds de collecte (20a, 22a) superposés, dont celui du haut (20a) recueille le distillat et celui du bas (22a) le condensat, et **en ce que** celui du haut (20a) des deux fonds de collecte (20a, 22a) présente pour chaque tube évaporateur (12a) une ouverture de passage (34a) à travers laquelle le concentré s'écoulant sur le tube évaporateur (12a) concerné arrive dans le fond de collecte inférieur (22a).

7. Dispositif selon la revendication 6, **caractérisé en ce que** chaque tube évaporateur (12a) passe à travers l'ouverture de passage (32a) associée à distance, sur tout le tour, du bord de l'ouverture.

8. Dispositif selon l'une des revendications 3, 4, 6 ou 7, **caractérisé en ce que** chaque ouverture de passage (32 ; 32a) est entourée par une collerette annulaire (34 ; 34a) dressée vers le haut.

9. Dispositif selon l'une des revendications 3, 4 ou 6 à 8, **caractérisé en ce que** les fonds de collecte (20, 22 ; 20a, 22a) sont formés par des plateaux de collecte pour l'essentiel plats placés à l'oblique, en particulier à l'oblique en sens inverse, par rapport à l'horizontale dans le boîtier (10 ; 10a).

10. Dispositif selon l'une des revendications 3, 4 ou 6 à 9, **caractérisé en ce qu'**au moins l'un (22) des fonds de collecte (20, 22 ; 20a, 22a), en particulier au moins le fond de collecte de concentré (22, 22a), peut être chauffé.

11. Dispositif selon la revendication 10, **caractérisé en ce que** le fond de collecte chauffant (22 ; 22a) est réalisé à double paroi avec une cavité (26 ; 26a) entre ses deux parois et **en ce que** la cavité (26 ; 26a) est raccordée à un circuit pour un fluide chauffant.

12. Dispositif selon l'une des revendications 3, 4 ou 6 à 11, **caractérisé en ce que** le boîtier (10 ; 10a) présente entre les deux fonds de collecte (20, 22) ou au-dessus de celui du haut des deux fonds de collecte (20a, 22a) un branchement (36 ; 36a) pour une conduite d'évacuation reliée à des moyens de pompage.

13. Dispositif selon l'une des revendications 1 à 12, **caractérisé en ce que** chaque tube intérieur de chaque paire tube évaporateur-tube de condensation est appuyé sur le bac répartiteur (16).

14. Dispositif selon la revendication 2 ou l'une des revendications 3, 4 ou 8 à 13 en se référant à la revendication 2,
**caractérisé en ce que**, pour l'alimentation de la substance dans le tube évaporateur (12) au nombre d'au moins un, le bac répartiteur (16) est réalisé en bac perforé dont le fond (54) présente, pour chaque tube évaporateur (12), un orifice d'écoulement centré ou un ensemble de plusieurs orifices de passage (66) répartis en rond pour la substance contenue dans le bac répartiteur (16).

15. Dispositif selon la revendication 2 ou l'une des revendications 3, 4 ou 8 à 14 en se référant à la revendication 2,
**caractérisé en ce que** sur le bac répartiteur (16 ; 16a) sont placés des surfaces anti-projections (68) dépassant de son fond (54 ; 54a) en direction du bas, mais se terminant au-dessus du tube de condensation (18, 18a), surfaces qui servent à protéger contre des projections de la substance à évaporer en direction du tube de condensation (18) au nombre d'au moins un.
